# EUROPÄISCHE PATENTANMELDUNG

(11) **EP 4 707 245 A1**
(43) Veröffentlichungstag der Anmeldung: **11.03.2026**
(21) Anmeldenummer: 25199038.8
(22) Anmeldetag: 29.08.2025
(51) Int. Cl.: C02F 1/00, C02F 1/42, B01J 47/024, C02F 103/02

(54) **KARTUSCHE ZUR AUFBEREITUNG VON WASSER, WASSERAUFBEREITUNGSGEBINDE, WASSERAUFBEREITUNGSGEBINDESATZ**

(30) Priorität: 10.09.2024 DE 102024125892
(71) Anmelder: UWS Technologie GmbH, 91610 Insingen (DE)
(72) Erfinder: Schleep, Thomas, 91610 Insingen (DE)
(74) Vertreter: Manitz Finsterwald Patent- und Rechtsanwaltspartnerschaft mbB

(57) **Zusammenfassung**

Eine Kartusche (100) zur Aufbereitung von Wasser eines Wasserkreislaufs (31) hat einen Behälter (101) zur Aufnahme von Aufbereitungsmaterial (205, 206), einen Einlassanschluss (102) am Behälter (101) zum reversiblen Anschließen der Kartusche (100) an eine Einlassleitung (38) oder eine Wasserquelle (36), und einen Auslassanschluss (103) am Behälter (101) zum reversiblen Anschließen der Kartusche (100) an eine Auslassleitung (37) oder den Wasserkreislauf (31), wobei der Behälter (101) einen Behälterkörper (105) und darin eine mit einem Verschluss (104) reversibel verschließbaren Öffnung (106) aufweist, durch die das Aufbereitungsmaterial (205, 206) aus dem Behälter (101) entnommen und in den Behälter (101) eingeführt werden kann.

## Beschreibung

Die Erfindung betrifft eine Kartusche zur Aufbereitung von Wasser, ein Wasseraufbereitungsgebinde und einen Wasseraufbereitungsgebindesatz.

Wasser wird beispielsweise als Wärme- oder Kältetransportmittel in Heiz- oder Kühlkreisläufen verwendet. Solche Kreisläufe sind üblicherweise geschlossene Kreisläufe. Sowohl bei Neubefüllungen von Wärme- und Kältesystemen mit Wasser als auch bei Nachspeisungen von Wasserkreisläufen wegen Wasserverlusten muss sichergestellt werden, das in solche Kreisläufe nicht kumulierend Ionen und Ablagerungen eingetragen werden. Aus diesem Grund wird das zugeführte Wasser als Energieträger aufbereitet. Die Aufbereitung umfasst dabei insbesondere, dass allgemein Ionen und insbesondere saure oder basische Komponenten der Menge nach unter ein mittelbar oder unmittelbar vorbestimmtes Maß gebracht werden. Das Maß kann bspw. die spez. Leitfähigkeit des Wassers oder dessen pH-Wert sein. Die Aufbereitung erfolgt regelmäßig, indem Wasser vor dem Einfüllen in den zu befüllenden Kreislauf über ein sogenanntes "Mischbett" läuft, das Ionentauschermaterial enthalten kann. Es werden damit unerwünschte Ionen aus dem Wasser entfernt, sodass sie nicht in den zu befüllenden Kreislauf gelangen. Für die Aufbereitung von Wasser in dieser Weise gelten auch Normen und/oder Standards und/oder Richtlinien, für Deutschland beispielsweise die Richtlinie VDI 2035.

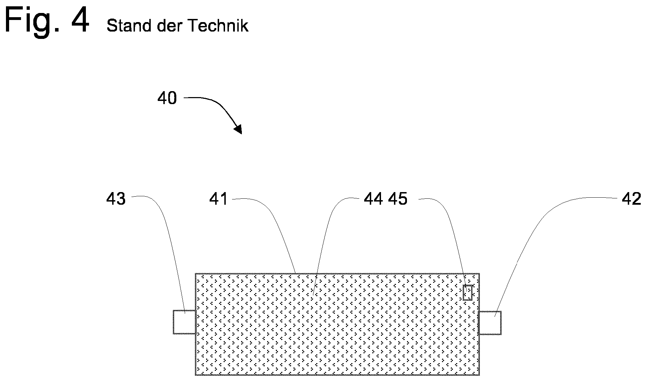

Figur 4 zeigt ein bekanntes Wasseraufbereitungsgerät 40. Es weist einen Behälter 41 mit einem Zulaufanschluss 42 und einem Auslassanschluss 43 auf. Im Behälter 41 befindet sich das Mischbett 44, also zum Beispiel Ionentauschermaterial, das von dem zu behandelnden Wasser auf seinem Weg vom Einlass 42 zum Auslass 43 umströmt wird, so dass dabei die unerwünschten Ionen aufgefangen bzw. adsorbiert werden. Es kann sich dabei um ein körniges, nicht wasserlösliches Material handeln. Es ist ein Verbrauchsprodukt, indem es sich im Laufe der Zeit durch die bestimmungsgemäße Verwendung verbraucht. Bekannte Kartuschen 40 können ein aufgeschraubtes kleines Sichtfenster 45 aufweisen, durch das das Ionentauschermaterial von außen sichtbar ist. Das Material kann so ausgelegt sein, dass es mit zunehmendem Verbrauch einen Farbumschlag zeigt. Durch das Sichtfenster 45 kann dadurch letztlich die Verbrauchtheit des Ionentauschermaterials verfolgt werden.

Bekannte Kartuschen 40 haben den Nachteil, dass sie Einwegprodukte sind. Das Gehäuse 41 ist irreversibel verschlossen. Wenn das darin enthaltene lonentauschermaterial 44 verbraucht ist, wird die Kartusche 40 als Ganzes entsorgt. Außerdem ist bei bekannten Kartuschen 40 das aufgeschraubte Sichtfenster 45 bei Verwendung und Transport sehr empfindlich. Die angebrachten Einlass- und Auslassteile sind aus Kunststoff und einem nicht gewolltem Verschleiß durch die Verbindungen zur Anschlussstelle der Wasserkeisläufen unterworfen, sodass ein neue Kartuschen nicht genutzt werden kann und alles zur Entsorgung gegeben werden muss, sodass letztlich die Verbrauchtheit schlecht oder nur umständlich wahrgenommen werden kann.

Aufgabe der Erfindung ist es, eine Wasseraufbereitungskartusche anzugeben, die ressourcenschonend arbeitet. Diese Aufgabe wird mit den Merkmalen des Anspruchs 1 gelöst. Es werden außerdem ein Wasseraufbereitungsgebinde und ein Wasseraufbereitungsgebindesatz angegeben, die mit der beschriebenen Kartusche zusammen verwendet werden können.

Eine Kartusche zur Aufbereitung von Wasser eines Wasserkreislaufs hat einen Behälter zur Aufnahme von Aufbereitungsmaterial, einen Einlassanschluss zum reversiblen Anschließen der Kartusche an eine Einlassleitung oder eine Wasserquelle, und einen Auslassanschluss zum reversiblen Anschließen der Kartusche an eine Auslassleitung oder den Wasserkreislauf. Der Behälter hat einen Behälterkörper mit einer mit einem Verschluss reversibel verschließbaren Öffnung, durch die das Aufbereitungsmaterial aus dem Behälter entnommen und in den Behälter eingeführt werden kann.

Durch die reversibel verschließbare Öffnung kann Aufbereitungsmaterial in den Behälter gegeben und aus ihm entfernt werden. Der Behälter ist so mehrfach verwertbar. Soweit das Aufbereitungsmaterial recycelbar ist, kann es, wenn es verbraucht entnommen wurde, recycelt und erneut verwendet werden.

Der Einlassanschluss kann an einem von Behälterkörper und Verschluss und der Auslassanschluss am anderen von Behälterkörper und Verschluss angebracht sein. Mit dem Abnehmen des Verschlusses vom Behälterkörper wird dann also auch einer der Anschlüsse vom Behälterkörper abgenommen.

Der Behälter kann einen rohrförmigen Bereich vorzugsweise mit rundem oder kreisförmigen Querschnitt und an den Rohrenden je einen Endbereich aufweisen. Der Einlassanschluss kann am einen und der Auslassanschluss am anderen der Endbereiche vorgesehen sein. Der Behälter hat dann insgesamt eine längliche Form und die Anschlüsse können an den Enden in Längsrichtung betrachtet liegen. Im rohrförmigen Bereich kann die Querschnittsfläche und/oder die Querschnittsform über die Länge betrachtet konstant sein oder sich verändern. Der rohrförmige Bereich kann über die Länge betrachtet leicht konisch geformt sein, was bei einem Gussbauteil die Entformung vereinfacht.

Einer der Endbereiche kann der Verschluss oder wenigstens ein Teil davon sein und kann am Behälterkörper, insbesondere am rohrförmigen Bereich, reversibel anbringbar sein. Die Anbringung kann mittels eines Gewindes oder eines Flansches mit Überwurfmutter oder eines Bajonettanschlusses erfolgen.

Die Öffnung entspricht somit in etwa einem Querschnitt des rohrförmigen Bereichs. Der Verschluss kann im Wesentlichen durch einen der Endbereiche gebildet sein. Der Verschluss kann aber auch ein mehr oder minder langes Teil des rohrförmigen Bereichs aufweisen. Ein Gewindeverschluss kann dann beispielsweise ein um den Umfang des rohrförmigen Bereichs umlaufendes Außengewinde aufweisen, das mit einem entsprechenden Innengewinde des anderen Teils oder mit einer Überwurfmutter zusammenwirkt. Eines von Behälterköper und Verschluss kann im Falle einer Überwurfmutter einen flanschartigen Bereich aufweisen.

Der Behälter, vorzugsweise dessen Verschluss, kann über mindestens 2 oder 5 oder 10 cm² seiner Oberfläche, vorzugsweise über einen vollständigen Umfang hinweg, einen transparenten Bereich mit transparentem Material aufweisen. Die Gestaltung kann weiter so sein, dass durch den transparenten Bereich Aufbereitungsmaterial im Inneren des Behälters sichtbar ist. Insbesondere der Verschluss kann mit transparentem Material gebaut sein. Der transparente Bereich ist dadurch so groß, dass das Aufbereitungsmaterial im Behälterinneren mühelos und insbesondere auch unabhängig von der momentanen Positionierung der Kartusche wahrgenommen werden kann. Vorzugsweise ist der Verschluss weitgehend oder vollständig mit transparentem Material gebildet.

Beim Verschluss und/oder beim Behälterkörper kann es sich um Kunststoffgebilde handeln. Es können Spritzgussteile sein. Der Verschluss und/oder Behälterkörper kann auch aus oder mit metallischem Material gebildet sein.

Das Aufbereitungsmaterial kann als ein einheitlich handhabbares und durchströmbares erstes Gebinde zusammengefasst, das in seiner Geometrie an die Innenabmessung des Behälters angepasst sein kann und in den Behälter einbringbar oder eingebracht ist.

Wenn das Aufbereitungsmaterial als einheitliches Gebinde ausgebildet ist, ist es einfach handhabbar und kann einfach in die Kartusche eingesetzt werden und auch einfach entnommen werden, auch wenn es nass ist. Beispielsweise kann das Gebinde das eigentliche wirksame Material aufweisen und eine wenigstens bereichsweise wasserdurchlässige Aufnahme, etwa einen eher textilen Beutel oder einen wenigstens bereichsweise wasserdurchlässigen Materialbehälter, in dem das Material eingeschlossen ist. Der Beutel bzw. Materialbehälter bzw. das Gebinde kann in seiner Form an die Innenform der Kartusche angepasst sein. Das Beutel- bzw. Behältermaterial bzw. deren Bau ist so gewählt, dass es das wirksame Aufbereitungsmaterial beieinander hält, aber von Wasser hinreichend einfach durchflossen werden kann, sodass das Wasser an das wirksame Aufbereitungsmaterial gelangt. Der Gebindebeutel oder -behälter kann vernäht und/oder verklebt und/oder verschweißt und/oder gesteckt und/oder verschraubt sein. sein.

Die Kartusche kann dazu ausgelegt sein, ein zweites einheitlich handhabbares und durchströmbares Gebinde von zweitem Aufbereitungsmaterial, das abhängig von seiner Verbrauchtheit einen Farbveränderung zeigt, aufzunehmen, wobei das zweite Gebinde im Behälterinneren im Bereich des transparenten Bereichs liegt.

Aufbereitungsmaterial, das eine Farbveränderung zeigt, wenn es zunehmend verbraucht ist, ist teurer als Aufbereitungsmaterial, das diesen Farbeffekt nicht oder nur gering zeigt. Es ist außerdem weniger umweltfreundlich. Es ist deshalb wünschenswert, den Einsatz eines solchen, eine Farbveränderung zeigenden Aufbereitungsmaterials mengenmäßig möglichst zu reduzieren. Es ist deshalb sinnvoll, zwei Gebinde zu verwenden, nämlich eines mit Aufbereitungsmaterial, das keinen oder nur einen geringen Farbveränderungseffekt bei Verbrauchtheit zeigt, und eines, das kleiner sein kann als das vorhergenannte und das Aufbereitungsmaterial mit Farbveränderungseffekt bei zunehmender Verbrauchtheit beinhaltet. Letztere kann in seiner Formgebung an die Innenform des Behälterteils angepasst sein, das den transparenten Bereich aufweist.

Die beiden Gebinde können in Wasserflussrichtung hintereinander liegen. Zwischen ihnen kann ein als Verbinder dienendes Zwischenstück mit Durchflussöffnungen vorgesehen sein.

Auf diese Weise ist sichergestellt, dass die beiden Gebinde an den Orten im Kartuscheninneren liegen bleiben, an denen sie liegen sollen. Das Zwischenstück kann reversibel in das Behälterinnere einsetzbar und aus ihm entnehmbar sein. Die Trennscheibe kann aus nachgiebigem beziehungsweise elastischem Material gefertigt sein, das sich z. B. reversibel in den Innenumfang des Behälters einspreizen kann.

Die Kartusche kann ein in Flussrichtung stehenden Rückschlagventil am Einlassanschluss oder am Auslassanschluss aufweisen. Das Rückschlagventil verhindert, dass Wasser entgegen der eigentlich vorgesehenen Flussrichtung aus dem zu befüllenden Kreislauf heraus austritt und rückwärts in den Quellkreislauf gelangt.

Der Einlassanschluss und/oder der Auslassanschluss können einen Stutzen vorzugsweise mit Gewinde für eine Überwurfmutter und/oder für einen Bajonettanschluss aufweisen. Die Stutzten können zum Anschluss an eine jeweilige Schlauchleitung ausgelegt sein, die zur Wasserquelle beziehungsweise zum befüllenden Kreislauf führen. Sie können aber auch zum direkten Anschluss an Quelle und/oder zu befüllenden Kreislauf ausgelegt sein. Die Gewinde können Normgewinde sein, etwa 3/8"-Gewinde.

Die Stutzen können einstückig mit den jeweiligen Behälterelementen ausgebildet sein, und können beispielsweise angegossen sein. Oder sie können als separate Bauelemente angesetzt, angebracht oder eingegossen sein. Die Stutzen können beispielsweise aus metallischem Material gebildet und in Plastikmaterial eingegossen sein. Das metallische Material kann Messing sein oder aufweisen. Das Gewinde auf dem Stutzen kann ein Außengewinde sein. Die distale Stirnfläche des Stutzens kann ringförmig ausgebildet sein und kann dazu ausgelegt sein, mittels einer Überwurfmutter den Flansch eines passenden Anschlusses aufgepresst zu bekommen. Der Stutzen kann aber auch Teil einer Bayonetteverbindung sein.

Der Behälter kann mit Kunststoffmaterial gebaut sein, wobei der Einlassanschluss und/oder der Auslassanschluss ein in das Kunststoffmaterial eingeschraubtes oder eingegossenes Metallteil sein kann, vorzugsweise mit oder aus Messing. Das womöglich verwendete Kunststoffmaterial des Behälterkörpers kann ein Thermoplast oder ein Duroplast sein oder aufweisen. Gleiches gilt für den Verschluss.

Der rohrförmiger Bereich des Behälters kann einen Innendurchmesser von über 6 oder 8 oder 10 oder 15 cm und/oder von unter 20 oder 15 oder 12 oder 10 cm aufweisen. Bei nicht kreisförmigen Querschnittsformen sei der Durchmesser als derjenige eines zum realen Querschnitt flächengleichen Kreises definiert. Der Behälter kann innen oder außen eine Länge von über 30 oder 40 oder 50 oder 60 cm und/oder von unter 100 oder 80 oder 60 oder 50 cm aufweisen. Einer oder beide Endbereiche können flach deckelförmig oder rund kuppelförmig ausgebildet sein. Die obigen Maße sind beispielhaft zu verstehen. Grundsätzlich kann die Kartusche jede geeignete Größe haben. In bestimmten Ausführungsformen ist sie tragbar und hat dann ohne Wasserfüllung, aber mit wirksamem Material befüllt, ein Gewicht von unter 15 oder unter 10 Kilogramm.

In einer weiteren Ausführungsform können der Einlassanschluss und/oder der Auslassanschluss der Kartuschen selbst Schläuche sein, die mehr oder minder fest am Behälter angesetzt sind und von diesem womöglich nicht lösbar sind. Eine lösbare Verbindung ist dann mit dem jeweiligen Schlauchende möglich, das dann wie beschrieben mit Stutzen und/oder Flansch mit Überwurfmutter und/oder mit einem Innengewinde und/oder Außengewinde versehen sein kann.

Ein Wasseraufbereitungsgebinde hat einen wasserdurchströmbaren, aber für Körner ab einer gewissen Größe undurchlässigen und geschlossenen Beutel und im Beutel Wasseraufbereitungsmaterial. Es ist für den Einsatz in einer Kartusche wie in dieser Beschreibung beschrieben ausgelegt.

Das Gebinde ist ein komplementäres Teil zur beschriebenen Kartusche und als solches ein eigenständiges Element der Erfindung. Das Gebinde kann einen wasserdurchlässigen Beutel aufweisen, der mit wirksamem Material befüllt und reversibel oder irreversibel verschlossen ist. Der Verschluss des Beutels oder Materialbehälters kann durch Nähen oder Stecken oder Kleben oder Verschweißen oder Klemmen oder mit einer Klettverbindung oder ähnlichem geschehen. Das Beutel- oder Behältermaterial ist überall oder wenigstens bereichsweise wasserdurchlässig. Es kann gitterartig oder gewebeartig oder siebartig gebildet sein und zahlreiche kleine Öffnungen aufweisen,. die den durchtritt von Wasser gestatten. Auch das Beutel- bzw. Behältermaterial kann wiederverwertbar sein.

Das Gebinde, insbesondere der Beutel oder der Materialbehälter, ist in seiner äußeren möglichen Dimensionierung, insbesondere also mögliche Querschnittsfläche und/oder mögliche Länge und/oder mögliche Querschnittsform, zum einen an die innere Dimensionierung des Behälters und zum anderen an die Abmessung der Öffnung angepasst. Das Gebinde kann in Grenzen verformbar sein. Die Dimensionierung kann so sein, dass das Gebinde bei einer sich natürlich einstellenden oder leicht einstellbaren Form leicht durch die BehälterÖffnung und leicht in den Behälterinnenraum geschoben werden kann.

Der Beutel kann textilartiges Material sein oder aufweisen. Als Beutel kann hier aber auch ein starreres Gebilde verstanden werden, etwa ein käfigartiger Behälter aus starrerem Material, etwa Kunststoff und/oder Metall.

Das Material des Beutels kann Kunststoff, insbesondere Polyester sein oder aufweisen.

Die Maschenweite kann über 20 oder 50 oder 100 µm liegen. Sie kann unter 500 oder 200 oder 100 µm liegen. Das Wasseraufbereitungsmaterial kann körnig sein und kann eine mittlere Korngröße aufweisen, die mindestens das Zweifache der Maschenweite des Behältermaterials ist. Sie kann über 50 oder 100 oder 200 µm liegen. Sie kann unter 2 oder 1 mm oder 500 oder 200 µm liegen. Es kann kugelförmiges Material sein mit mittleren Durchmessern zwischen 500 und 800 µm. Das Wasseraufbereitungsmaterial kann Kationen- und/oder Anionentauschermaterial sein oder aufweisen.

Ein Wasseraufbereitungsgebindesatz hat ein erstes Wasseraufbereitungsgebinde mit einem ersten Wasseraufbereitungsmaterial, das eine erste Art von Farbumschlag, insbesondere keinen oder nur einen geringen Farbumschlag abhängig von seiner Verbrauchtheit zeigt, und ein zweites Wasseraufbereitungsgebinde mit einem zweiten Wasseraufbereitungsmaterial, das abhängig von seiner Verbrauchtheit eine andere zweite Art, insbesondere einen kräftigeren oder anderen Farbumschlag zeigt als das Material im ersten Gebinde.

In dem Gebindesatz weisen die einzelnen Gebinde also unterschiedliche Materialien hinsichtlich des Farbumschlags bei Verbrauchtheit auf. Für die Wasseraufbereitung können sie aber gleichwirkend oder auch unterschiedlich wirkend sein. Das Gebinde mit Farbumschlag kann in seiner Größe an eine Abmessung, insbesondere die Größe des transparenten Bereichs des Behälters angepasst sein. Das andere Gebinde füllt dann das verbleibende Volumen des Behälters ganz oder teilweise.

In dem Wasseraufbereitungsgebindesatz können die beiden Wasseraufbereitungsgebinde miteinander verbunden sein, zum Beispiel derart, dass sie durchlaufendes, etwa schlauchartiges Beutelmaterial aufweisen, das eine Absteppung zur Schaffung bzw. Abgrenzung der beiden Gebinde gegeneinander aufweist, oder dass sie jeweils ein offenes Ende aufweisen und mit dem offenen Ende an ein durchströmbares Zwischenstück ansteckbar sind, das eine perforierten Boden zur Abtrennung der zwei Gebinde bildet.

Wenn die beiden Gebinde zusammenhängend ausgebildet sind, können sie einheitlich gehandhabt werden und es kann keine Verwechslung oder Fehlverwendung der einzelnen Gebinde geben. Die gemeinsame Größe der Gebinde ist an das Innenvolumen des Behälters angepasst, und auch hier kann die Größe des Behälters für Material mit Farbumschlag bei Verbrauch an die Größe des transparenten Bereichs des Behälters angepasst sein.

Nachfolgend werden bezugnehmend auf die Zeichnungen Ausführungsformen der Erfindung beschrieben, es zeigen
- Figur 1: eine Ausführungsform der Kartusche mit Merkmalen der Erfindung,
- Figur 2: Ausführungsformen von Materialgebinden und Materialgebindesätzen,
- Figur 3: die Verwendungsumgebung der Kartusche und
- Figur 4: Stand der Technik.

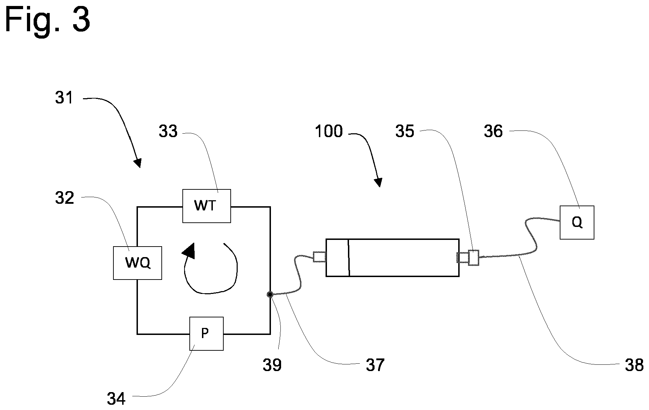

Die Figur 3 zeigt die Verwendungsumgebung der Kartusche 100 nach der Erfindung. Die bestimmungsgemäße Flussrichtung des Wassers ist in Figur 3 von rechts nach links anzunehmen. 100 ist die weiter unten genauer beschriebene Kartusche. 36 ist eine Wasserquelle. Es kann sich dabei um einen herkömmlichen Wasserhahn handeln, an den beispielsweise eine Schlauchleitung 38 anschließbar ist. 35 symbolisiert ein Rückschlagventil, das nur in Richtung von rechts nach links durchlässig ist und in die entgegengesetzte Richtung sperrt. Es sitzt hier am Einlass der Kartusche 100 und ist mit der Schlauchleitung 38 verbindbar.

Am anderen, linken Ende der Kartusche 100 ist der Auslassanschluss mit einer Schlauchleitung 37 verbunden, die zu einem Wasserkreislauf 31 führt, der beispielsweise ein Heizkreislauf sein kann. 34 symbolisiert eine Umwälzpumpe, die gemäß dem gezeigten Pfeil in dem Kreislauf Wasser im Uhrzeigersinn umwälzt. 32 ist eine Wärmequelle, beispielsweise ein Brenner, Solarthermie oder ähnliches. 33 ist ein Wärmetauscher, beispielsweise ein Heizkörper. 39 symbolisiert den Einspeisungspunkt für in den Heizkreislauf einzuspeisendes Wasser. Im Kreislauf 31 bzw. am Einspeispunkt 39 können nicht gezeigte Absperrhähne und ähnliches vorgesehen sein.

Die Schlauchverbindung 37 kann lösbar am Einspeispunkt 39 anbringbar sein. Üblicherweise hat der Heizkreislauf 31 keine Verbindung zur Wasserquelle 36. Wenn eine Befüllung mit Wasser allerdings nötig ist, wird diese Verbindung hergestellt, indem die Kartusche 100 zwischen Quelle 36 und Einspeispunkt 39 ggf. mit Schlauchveribindungen 37, 38 eingesetzt wird. Es wird dann Wasser bis zum gewünschten Füllstand eingefüllt. Nach Beendigung des Befüllvorgangs und dem Schließen der jeweils vorgesehenen Hähne wird die Kartusche 100 wieder abmontiert. Sie kann beispielsweise von einem Monteur zu seinen jeweiligen Einsatzorten mitgenommen werden.

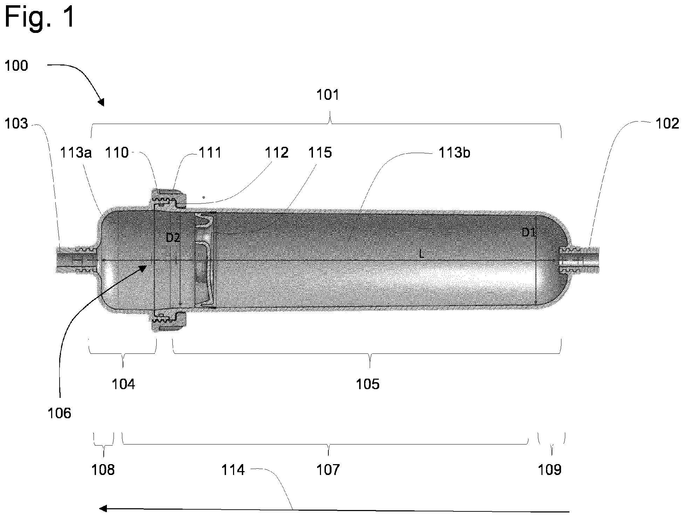

Figur 1 zeigt in Kombination Merkmale der Kartusche 100. Sie weist einen Behälter 101 mit einem Einlassanschluss 102 und einem Auslassanschluss 103 auf. Der Behälter kann länglich sein. Mit Pfeil 114 ist die planmäßige Flussrichtung angezeigt. In Figur 1 ist sie von rechts nach links.

Der Behälter 101 in Figur 1 hat beispielhaft einen rohrförmigen Bereich 107 und Endbereiche 108, 109 an den beiden Enden des Rohrs.

In der Ausführungsform der Figur 1 ist die Öffnung 106 ein offenes Ende oder ein offen liegender Querschnitt des rohrförmigen Bereichs 107. Figur 1 zeigt dabei den Zustand, bei dem die Öffnung 106 durch einen Verschluss 104 verschlossen ist, der durch einen Endbereich 108 gebildet ist, an dem aber auch, wie in Figur 1 gezeigt, noch ein vorzugsweise, aber nicht notwendig kurzes rohrförmiges Stück angesetzt sein kann.

In dieser Ausführungsform kann an einem von Behälterkörper 105 und Verschluss 104 ein Außengewinde um den Umfang herum ausgebildet sein, das mit einem Innengewinde zusammenwirkt, das vom jeweils anderen vom Behälterkörper 105 beziehungsweise Verschluss 104 herkommt. Das Innengewinde kann dabei am jeweils anderen von Behälterkörper 105 und Verschluss 104 ausgebildet sein oder kann, wie in Figur 1 gezeigt, das Innengewinde einer Überwurfmutter 111 sein, die auf das Gewinde 110 aufgeschraubt wird und mittels eines Absatzes den anderen Körper festhält. In dieser Ausführungsform sind dann jeweils die Querschnittsformen von Behälterkörper 105 und Verschluss 104 kreisförmig, um die Gewinde entsprechend ausbilden zu können.

Der Behälter 101 hat eine innere Länge L und im rohrförmigen Teil 107 einen Durchmesser D1, D2, der konstant sein kann oder der sich in Größe und/oder Form ändern kann. Auch die Querschnittsform kann konstant sein oder kann sich über die Länge (links-rechts in Figur 1) ändern. In der Ausführungsform der Figur 1 ist angenommen, dass die Querschnittsform durchwegs rund beziehungsweise kreisförmig ist. Wenn es sich beim Behälterkörper 105 um einen Spritzgusskörper aus Plastik handelt, kann es vorteilhaft sein, dass der rohrförmige Bereich leicht konisch ausgebildet ist, um das Ausformen, also das Entnehmen aus einer Spritzgussform, zu erleichtern. Ein Flansch 112 kann den größten Außendurchmesser des Behälterkörpers darstellen und dem Angriff der Überwurfmutter 111 dienen. Dann kann auch dort der größte Innendurchmesser D2 des rohrförmigen Bereichs 107 anzutreffen, in Figur 1 also am linken Ende des rohrförmigen Teils 105, während sich der Durchmesser nach rechts zum rechten Ende des rohrförmigen Teils 105 hin leicht verringern kann. Der Unterschied kann weniger als 10 oder 5 oder 2 % des größeren Durchmessers ausmachen.

Der Verschluss 104, der in der Ausführungsform der Figur 1 durch den Endbereich 108 mit einem kurzen rohrförmigen Ansatz gebildet ist, kann aus durchsichtigem Kunststoff gefertigt sein. Es kann ein Spritzgussteil aus durchsichtigem Kunststoff sein. In das Spritzgussteil können die wesentlichen strukturellen Merkmale eingeformt sein. Ein gegebenenfalls nötiges Gewinde 110 kann gleich anfänglich eingeformt sein oder kann nachträglich eingeschnitten werden. Ein Stutzen 103 kann einstückig mit gegossen sein oder kann als separates Bauteil eingegossen sein. Wenn der Verschluss 104 durchgängig oder weitgehend aus transparentem Material gebildet ist, erlaubt er eine einfache Beobachtung des von ihm umfangenen Aufbereitungsmaterials. Es kommt dann auch nicht auf die momentane Arbeitslage der Kartusche an, da die Transparenz um den Umfang der Kartusche herum gegeben ist. Als Mindestmaß der Größe des transparenten Bereichs wird eine Fläche von zwei oder fünf oder zehn Quadratzentimetern angesehen, um die Farbe des Aufbereitungsmaterials im Inneren der Kartusche 100 einfach beobachten zu können. Vorzugsweise läuft der transparente Bereich vollständig um den Umfang des Verschlusses um. Die Transparenz kann wasserklar oder milchig sein.

Die Endbereiche 108, 109 sind in der Ausführungsform der Figur 1 kuppelförmig verrundet ausgebildet. Sie können aber auch eher flachdeckelförmig ausgebildet sein. In der Ausführungsform der Figur 1 sind die Anschlüsse 102, 103 in den Endbereichen 109, 108 ausgebildet und liegen auf der Längsachse der Kartusche 100. Es sind aber auch andere Anbringungen möglich. Die Anschlüsse 102, 103 können beispielsweise seitlich ansetzten. In Figur 1 wäre das beispielsweise von oben oder von unten in der Zeichnungsebene betrachtet.

Der Behälterkörper kann aus oder mit undurchsichtigem Plastikmaterial gefertigt sein, bspw. einem Thermoplasten oder einem Duroplasten.

Der Behälter 101 hat insgesamt einen Innenraum 113, der in der Ausführungsform der Figur 1 in zwei Bereiche 113a und 113b entsprechend Verschluss 104 und Behälterkörper 105 unterteilt gesehen werden kann. Der Teil 113a füllt wenigstens das Volumen, das durch den Verschluss 104 abgesehen von der Öffnung bei 106 umgrenzt wird. Der Teil 113b ist im Wesentlichen durch das Volumen des Behälterkörpers definiert. Zwischen den beiden Teilbereichen 113a und 113b kann eine Trennscheibe 115 mit Durchlassöffnungen für das strömende Wasser vorgesehen sein.

Die Trennscheibe 115 erlaubt es, die beiden Volumenbereiche mit unterschiedlichen Aufbereitungsmaterialien zu befüllen und verhindert ihre Vermischung nach Befüllung..

In Figur 1 ist die Kartusche 100 schematisch unbefüllt dargestellt. Im Einsatz sind die Volumina 113a und 113b allerdings mit Aufbereitungsmaterial befüllt, das unmittelbar lose in das Innere des Behälters 101 eingefüllt werden kann. Es tritt dann Wasser am Einlassanschluss 102 in die Kartusche 100 ein, fließt entsprechend sonstiger eingestellter Parameter mehr oder minder schnell von rechts nach links entsprechend Pfeilrichtung 114, umströmt dabei das Aufbereitungsmaterial und tritt zuletzt am Auslassanschluss 103 wieder aus der Kartusche 100 aus. Unterwegs hat es unerwünschte An- und Kationen abgegeben bzw. gegen H+- und OH--Ionen getauscht und verlässt so die Kartuschen 100 mit verringerter Ionenlast.

Das Wasseraufbereitungsmaterial kann eine körnige, kiesartige oder sandartige Struktur haben und ist vorzugsweise wasserunlöslich. Für den Farbumschlag bzw. die Farbveränderung entsprechend Verbrauchtheit kann ein geeigneter Indikator zugemischt sein.

Wie schon gesagt, können anders als in Figur 1 gezeigt der Einlassanschluss 102 und der Auslassanschluss 103 auch angeformte Schläuche sein bzw. aufweisen, die an ihrem distalen Ende jeweils ankoppelbare Strukturen aufweise, etwa die Gewinde, wie sie zu den Anschlüssen 102 und 103 der Figur 1 beschrieben sind. Zum Schutz des speisenden Wasserkreislaufs stromaufwärts der Wasseraufbereitungskartusche kann nötigenfalls z. B. gemäß DIN EN 1717 ein Rohrtrenner bzw. Systemtrenner bzw. Rückschlagventil vom Typ BA/CA vorgeschaltet werden, also stromaufwärts der Kartusche vorgesehen sein, z. b. an ihrem Einlass.

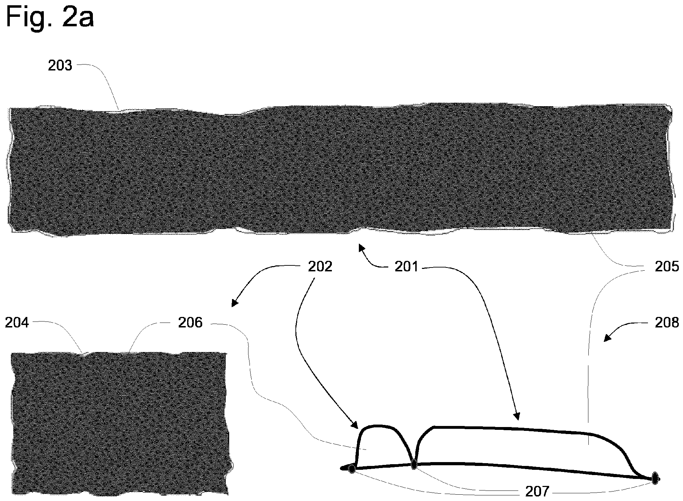

Figur 2a zeigt Ausführungsformen verschiedener Wasseraufbereitungsgebinde 201, 202, und eines Wasseraufbereitungsgebindesatzes 208, die in der Kartusche der Figur 1, insbesondere den Kartuschenbehälter 101, verwendet werden können, insbesondere in sie eingesetzt und ihr entnommen werden können. Die Verwendung kann ohne Trennscheibe 115 erfolgen. Ein Gebinde 201, 202 weist einen Beutel 203,204 auf mit Aufbereitungsmaterial 205, 206 darin. Die Auslegung ist so, dass im befüllten Zustand der Beutel des Gebindes so fest verschlossen ist, dass Aufbereitungsmaterial 205, 206 kaum bzw. praktisch nicht aus dem Beutel 203, 204 austreten kann. Andererseits ist das Beutelmaterial so gewählt, dass Wasser leicht in den Beutel einströmen und das Aufbereitungsmaterial darin umströmen und anschließend aus dem Beutel wieder ausströmen kann. Die Formgebung im befüllten Zustand ist so, dass das Gebinde einfach in das Volumen 113 und insbesondere die Teilvolumina 113a und 113b, eingesetzt werden können.

Der Beutel 203, 204 kann textilartiges oder folienartiges Material ohne nennenswerte Eigensteifigkeit, aber mit genügender Durchlässigkeit für Wasser sein oder aufweisen. Es kann sich um Mikrometerfolie (um-Folie) handeln. Es bzw. sie kann vernäht oder verklebt oder verschweißt sein. Der Beutel kann aber auch ein steiferes Gebilde sein, etwa ein käfigartiger Behälter in geeigneter Form aus starrerem Material, etwa Kunststoff und/oder Metall. Der Beutel kann reversibel verschließbar sein.

Das Gebinde, insbesondere der Beutel, ist in seiner äußeren tatsächlichen oder möglichen Dimensionierung, insbesondere also Umfang und/oder Länge und/oder mögliche Querschnittsfläche und/oder mögliche Querschnittsform, zum einen an die entsprechenden inneren Dimensionierungen des Behälters und zum anderen an die Abmessung der Öffnung angepasst. Das Gebinde kann in Grenzen verformbar sein. Die Dimensionierung kann so sein, dass das Gebinde in seiner tatsächlichen Form oder bei einer sich natürlich einstellenden oder leicht einstellbaren Form einerseits leicht durch die Behälteröffnung und leicht in den Behälterinnenraum geschoben werden kann und dann das Volumen im Wesentlichen füllt.

In einer Ausführungsform werden unterschiedliche Aufbereitungsmaterialien bzw. Gemische 205, 206 verwendet. Eines 206 zeigt mit zunehmender Verbrauchtheit einen bestimmten Farbumschlag oder eine bestimmte Farbveränderung, während das andere 205 mit zunehmender Verbrauchtheit keinen oder nur einen geringen oder einen anderen Farbumschlag bzw. farbveränderung zeigt. Die beiden Gebinde können unterschiedlich groß sein. Das Aufbereitungsmaterial bzw. Gemisch mit Farbumschlag kann teurer und/oder weniger umweltverträglich als das Aufbereitungsmaterial ohne Farbumschlag sein. Es ist deshalb vorzuziehen, dass das Gebinde mit Material mit Farbumschlag insgesamt kleiner ist als das mit Material ohne Farbumschlag. Die Auslegung kann so sein, dass das Gebinde 202 mit Material 206 mit Farbumschlag so groß ist, dass es in der Ausführungsform der Figur 1 das vom transparenten Behälterteil umfangene oder gebildete Volumen einnimmt, in Figur 1 also links das Teilvolumen 113a, sodass dort der Farbumschlag gut beobachtet werden kann. Das übrige, größere Volumen 113b in Figur 1 Mitte und rechts kann dagegen vom größeren Gebinde 201 mit Aufbereitungsmaterial ohne Farbumschlag eingenommen werden. Der Beutel 204 des Gebindes 202 mit Farbumschlag ist so beschaffen, dass eine Farbänderung des Materials 206 in seinem Inneren von außen wahrgenommen werden kann

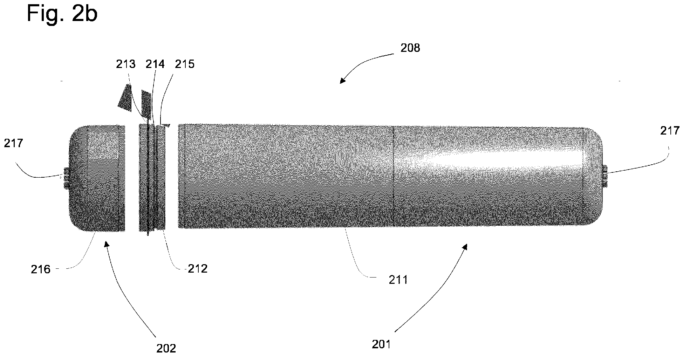

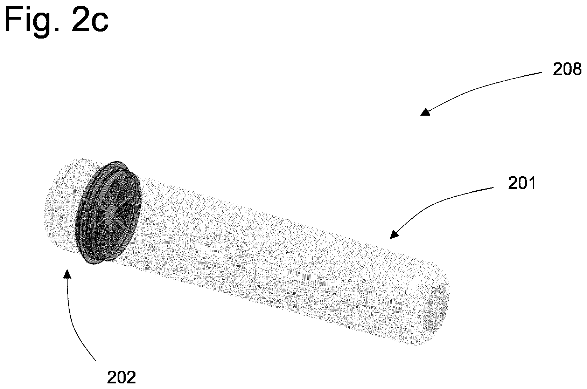

Figur 2a zeigt rechts unten schematisch einen Gebindesatz, bei dem Gebinde 201 und 202 miteinander verbunden vorgesehen sind. Beispielsweise können die Beutel durch ein textilartiges Gewebe oder eine perforierte Folie oder feinmaschiges Gitter gebildet sein, das bzw. die schlauchartig vernäht oder sonstwie zusammengefasst ist und das bzw. die an geeigneter Stelle längs des Schlauches einen Abnäher beziehungsweise eine Quernaht oder sonstige Quertrennung hat, um die zwei Abteile der zwei Gebinde 201, 202 zu bilden und gegeneinander abzugrenzen. Links der Naht bzw. Abtrennung kann vom einen Schlauchende her dann das eine Material 206 eingefüllt werden, rechts der Naht vom anderen Ende her das andere Material 205. Wenn die beiden Materialien eingefüllt sind, können die jeweiligen Abteile wie schon gesagt verschlossen werden, beispielsweise durch Vernähen, Verkleben, Verschweißen, mit Klettverschluss oder ähnlichem. Figur 2 deutet mit 207 jeweilige Verschlussnähte an den Enden und die Mittennaht zur Trennung der zwei Gebinde voneinander an.

Der Gebindesatz 208 hat den Vorteil, dass die einzelnen Gebinde nicht miteinander verwechselt werden können, sodass es nicht zu Fehlverwendungen kommen kann. Auch die Handhabung ist dann insgesamt einfacher.

Figur 2b zeigt eine andere Ausführungsform eines Wasseraufbereitungsgebindesatzes 208. Es hat einen dreiteiligen festen Materialbehälter, der als Ganzes in die Kartusche der Figur 1, insbesondere ihren Behälter 101, eingesetzt werden kann. Der Behälter setzt sich aus drei Einzelteile 211, 212, 216 zusammen, die aneinander anbringbar sind und dann eine Einheit bilden. Die Anbringung der Teile aneinander kann gesteckt, geschweißt, geklebt oder verschraubt oder ähnliches sein. Wasseraufbereitungsmaterialien können in die sich so ergebenden Behälterbereiche lose eingefüllt werden.

Ein erstes Teil 211 ist im rechten Teil der Fig. 2 links offen zur Befüllung mit einem oder mehreren Materialien für die Wasseraufbereitung, insbesondere Material 205 ohne Farbveränderung, zu sehen. Das in Fig. 2b rechte Ende ist entsprechend dem gewünschten Wasserdurchfluss dimensioniert und perforiert und kann Stegbolzen 217 aufweisen, die für eine gute Wasserverteilung beim Wassereintritt in den Behälterkörper 105 sorgen. Das erste Teil 211 ist so ausgeführt, dass es mit geringem Spiel formschlüssig in die Kartusche, insbesondere den Behälterkörper 105 eingeführt werden kann. Die Perforierung ist so dimensioniert, dass das Aufbereitungsmaterial im ersten Teil 211 nicht austreten kann, aber von Wasser umströmt bzw. durchströmt werden. Das perforierte rechte Ende kann wasserdicht an einen Einlass oder Auslass des Kartuschenbehälters 101 anschließbar gestaltet sein.

Das zweite Teil 212 kann als Zwischenstück bezeichnet werden und kann so so ausgelegt sein, dass es - in Fig. 2b - mit seinem rechten Ende passgenau von links in die linke Öffnung des ersten Teils 211 eingesteckt und dann ggf. verklebt oder verschweißt oder verschraubt oder verrastet werden kann. Es kann eine Anfasung 215 über seinen Umfang aufweisen. Das zweite Teil 212 hat innen über seinen Querschnitt eine perforierte Wand oder ein Sieb, das so dimensioniert ist, dass Aufbereitungsmaterial nicht aus dem ersten Teil 211 austreten kann. Das zweite Teil 212 kann eine Nut 214 für einen O-Ring aufweisen, um das Gesamtgebinde gegen das Behälterinnere abzudichten.

Das linke Ende des zweiten Teils 212 ist so ausgeführt, dass es passgenau in die rechte Öffnung des dritten Teils 213 gesteckt und dann ggf. verschweißt oder verklebt oder verschraubt werden kann. Das dritte Teil 213 ist in Fig. 2b rechts offen zur Befüllung mit einem oder mehreren Materialien 206 für die Wasseraufbereitung zu sehen. Es kann hier ein Indikatormaterial für die Farbveränderung entsprechend Verbrauchtheit zugemischt sein. Die Wasserdichtheit gegen den Kartuschenkörper kann allein durch die Steckverbindung, die verschweißt oder geklebt sein kann, gegeben. Das dritte Teil 213 kann teilweise oder vollständig aus durchsichtigem Material gefertigt sein, um die Farbveränderung des Aufbereitungsmaterial 206 im Inneren des dritten Teils 213 beobachten zu können. Die Ausführung ist so gestaltet, dass es passgenau ggf. mit geringem Spiel in den Verschluss 104 des Kartuschenbehälters 101 eingeführt werden kann. Das in Fig. 2b linke Ende des dritten Teils 216 ist entsprechend dem gewünschten Wasserdurchfluss perforiert und kann mit Stegbolzen 217 für die Ausrichtung im Kartuschenbehälter 101 versehen sein. Das perforierte linke Ende kann wasserdicht an einen Einlass oder Auslass des Kartuschenbehälters 101 anschließbar gestaltet sein.

Das zweite Teil 212 kann starr sein. Das erste Teil 211 und/oder das dritte Teil 216 kann ebenfalls ein steifes bzw. starres Gebilde sein, etwa ein käfigartiger Behälter in geeigneter Form aus starrem Material, etwa aus Kunststoff und/oder Metall. Das erste Teil 211 und/oder das dritte Teil 216 kann aber auch ein textilartiges Material oder eine perforierte Folie ohne nennenswerte Eigensteifigkeit aufweisen. Es kann mit dem zweiten Teil 202 vernäht oder verklebt oder verschweißt sein. Die drei Gebindeteile 211, 212, 216 können reversibel aneinender anbringbar und voneinander lösbar sein, beispielsweise durch eine Steck- oder Schraubverbindung.

Der Gebindesatz 208, insbesondere die käfigartigen Behälter des ersten Teils 211 und/oder des dritten Teils 216, sind in ihrer äußeren tatsächlichen oder möglichen Dimensionierung, insbesondere also Umfang und/oder Länge und/oder mögliche Querschnittsfläche und/oder mögliche Querschnittsform, zum einen an die entsprechenden inneren Dimensionierungen des Kartuschenbehälters 101 und dessen Öffnung angepasst. Das Gebinde kann in Grezen verformbar sein. Die Dimensionierung kann so sein, dass das Gebinde in seiner tatsächlichen Form oder bei einer sich natürlich einstellenden oder leicht einstellbaren Form einerseits leicht durch die Behälteröffnung und leicht in den Behälterinnenraum geschoben werden kann und dann das Volumen im Wesentlichen füllt.

In einer Ausführungsform werden unterschiedliche Aufbereitungsmaterialien 205, 206 zw. Materialmischungen vorzugsweise in unterschiedlichen Gebinden 201, 202 verwendet. Eines 206 der Materialien zeigt mit zunehmender Verbrauchtheit eine Farbveränderung oder einen Farbumschlag, während das andere 205 mit zunehmender Verbrauchtheit keinen oder nur einen geringeren oder einen anderen Farbumschlag zeigt. Die beiden Gebinde 201, 202 können unterschiedlich groß sein. Das Aufbereitungsmaterial 206 mit Farbänderung ist teurer und weniger umweltverträglich als das Aufbereitungsmaterial 205 ohne oder mit anderem oder geringerem Farbumschlag. Es ist deshalb vorzuziehen, dass das Gebinde mit Material 206 mit Farbumschlag insgesamt kleiner ist als das mit Material 205 ohne Farbumschlag bzw. Farbänderung. Die Auslegung kann so sein, dass das Gebinde mit Material 206 mit Farbumschlag so groß ist, dass es in der Ausführungsform der Figur 1 das vom transparenten Behälterteil umfangene oder gebildete Volumen einnimmt, in Figur 1 also links das Teilvolumen 113a, sodass dort der Farbumschlag gut beobachtet werden kann. Das übrige, größere Volumen 113b in Figur 1 Mitte und rechts kann dagegen vom größeren Gebinde mit Aufbereitungsmaterial 205 ohne Farbumschlag eingenommen werden.

Figur 2c zeigt schematisch den zusammengesetzten Gebindesatz 208. Angedeutet ist die Trennung der beiden Gebinde 201, 202 durch das zweite Teil 212 mit einem siebartigen Verschluss seines Querschnitts. Das größere Gebinde 201 ist mit Material 205 ohne Farbumschlag befüllt, das kleinere Gebinde 202 mit Material 206 mit Farbumschlag.

Der Wasseraufbereitungsgebindesatz 200 hat den Vorteil, dass die einzelnen Gebinde nicht miteinander verwechselt werden können, sodass es nicht zu Fehlverwendungen kommen kann. Auch die Handhabung ist dann insgesamt einfacher.

Die Kartusche kann fest bei einer Wasserkreislaufinstallation anbringbar gestaltet sein oder kann tragbar und an unterschiedliche Orte verbringbar sein.

Nachfolgend werden einige typische Merkmale und Wertebereiche angegeben, die einzeln oder in beliebiger Kombination miteinander gegeben sein können:
- Gesamtlänge der Kartusche incl. Anschlüsse über 300 oder 400 oder 500 mm und/oder unter 1000 oder 800 oder 600 mm,
- max. Durchmesser der Kartusche incl. Überwurfmutter über 100 oder 120 oder 140 mm und/oder unter 200 oder 170 oder 150 mm,
- optimale kontinuierliche Durchflussmenge der Kartusche über 2 oder 3 oder 4 Liter/min und/oder unter 10 oder 7 oder 5 Liter/min,
- max. Druck in der Kartusche über 3 oder 4 oder 5 bar und/oder unter 10 oder 8 oder 7 bar,
- max. Wassertemperatur über 30 oder 35°C und/oder unter 50 oder 45°C,
- Eigenschaften: Beseitigung von Kationen und Anionen im Füllwasser für salzarmen Betrieb,
- Behandlungskapazität bei 14°dH über 200 oder 300 oder 400 Liter und/oder unter 1000 oder 800 oder 600 Liter,
- Eingang Befüllwasser: ¾" Messinggewinde,
- Ausgang Befüllwasser: ¾" Messinggewinde.

Die in dieser Beschreibung und den Ansprüchen beschriebenen oder in einer Abbildung dargestellten Merkmale sollen auch dann als untereinander kombinierbar gelten, wenn ihre Kombination nicht ausdrücklich beschrieben ist, soweit die Kombination technisch möglich ist. Merkmale, die in einem bestimmten Kontext, einer bestimmten Ausführungsform, Figur oder einem bestimmten Anspruch beschrieben werden, sollen auch als von diesem Anspruch, Kontext, Ausführungsform oder Figur trennbar und als mit jeder anderen Figur, Anspruch, Ausführungsform oder Kontext kombinierbar angesehen werden, soweit dies technisch möglich ist. Beschriebene Merkmalskombinationen sollen auch dann als optional verstanden werden, wenn dies nicht ausdrücklich gesagt ist, es sei denn, die Kombination ist aus technischen Gründen erforderlich. Ausführungsformen und Figuren sollen nicht als notwendigerweise ausschließlich gegeneinander verstanden werden. Beschreibungen eines Verfahrens oder eines Ablaufs oder eines Verfahrensschrittes oder eines Ablaufschrittes sind auch als Beschreibung von Einrichtungen zu verstehen, die für die Implementierung des Verfahrens oder des Ablaufs oder des Verfahrensschrittes oder des Ablaufschrittes geeignet sind, und/oder sind auch als Beschreibung eines Artefakts zu verstehen, das mit dem Verfahrens oder Ablauf oder Verfahrensschritt oder Ablaufschritt erzeugt oder bearbeitet wurde, und umgekehrt. In der vorliegenden Beschreibung wird der Begriff Erfindung als die subjektiv vom Erfinder entwickelte Lehre verstanden.

### Bezugszeichenliste:

- 31: Wasserkreislauf
- 32: Wärmequelle
- 33: Wärmetauscher
- 34: Umwälzpumpe
- 35: Rückschlagventil
- 36: Wasserquelle
- 37: Schlauchverbindung
- 38: Schlauchverbindung
- 39: Einspeisepunkt
- 40: Kartusche
- 41: Behälter
- 42: Einlassaschluss
- 43: Auslassanschluss
- 44: Aufbereitungsmaterial
- 45: Fenster
- 100: Kartusche
- 101: Behälter
- 102: Einlassanschluss
- 103: Auslassanschluss
- 104: Verschluss
- 105: Behälterkörper
- 106: Öffnung
- 107: rohrförmiger Bereich
- 108, 109: Endbereich
- 110: Gewinde
- 111: Überwurfmutter
- 112: Flansch
- 113: Innenraum
- 114: Flussrichtung
- 115: Trennscheibe
- 201, 202: Wasseraufbereitungsgebinde
- 203, 204: Beutel
- 205, 206: Wasseraufbereitungsmaterial
- 207: Naht
- 208: Wasseraufbereitungsgebindesatz
- 211: erstes Teil
- 212: zweites Teil
- 213: Stegbolzen
- 214: Nut
- 215: Fase
- 216: drittes Teil
- 217: Stegbolzen

## Patentansprüche

1. Kartusche (100) zur Aufbereitung von Wasser eines Wasserkreislaufs (31), mit
einem Behälter (101) zur Aufnahme von Aufbereitungsmaterial (205, 206), einem Einlassanschluss (102) am Behälter (101) zum reversiblen Anschließen der Kartusche (100) an eine Einlassleitung (38) oder eine Wasserquelle (36), und
einem Auslassanschluss (103) am Behälter (101) zum reversiblen Anschließen der Kartusche (100) an eine Auslassleitung (37) oder den Wasserkreislauf (31), wobei der Behälter (101) einen Behälterkörper (105) und darin eine mit einem Verschluss (104) reversibel verschließbaren Öffnung (106) aufweist, durch die das Aufbereitungsmaterial (205, 206) aus dem Behälter (101) entnommen und in den Behälter (101) eingeführt werden kann.

2. Kartusche (100) nach Anspruch 1, bei der der Einlassanschluss (102) an einem von Behälterkörper (105) und Verschluss (104) und der Auslassanschluss (103) am anderen von Behälterkörper (105) und Verschluss (104) angebracht sind.

3. Kartusche (100) nach Anspruch 1 oder 2, bei der der Behälter (101) einen rohrförmigen Bereich (107) vorzugsweise mit rundem oder kreisförmigen Querschnitt und an den Rohrenden je einen Endbereich (108, 109) aufweist, wobei der Einlassanschluss (102) am einen und der Auslassanschluss (103) am anderen der Endbereiche (108, 109) vorgesehen ist.

4. Kartusche (100) nach Anspruch 3, bei der einer der Endbereiche (108, 109) der Verschlusses (104) oder wenigstens ein Teil davon ist und am Behälterkörper (105), insbesondere am rohrförmigen Bereich (107), reversibel anbringbar ist, wobei die Anbringung mittels eines Gewindes (110) oder eines Flansches mit Überwurfmutter (111) oder eines Bajonettanschlusses erfolgen kann.

5. Kartusche (100) nach Anspruch 4, bei der der Behälter (101), vorzugsweise der Verschluss (104), über mindestens 2 oder 5 cm² seiner Oberfläche, vorzugsweise über einen vollständigen Umfang, einen aus transparentem Material gefertigten transparenten Bereich aufweist und die Gestaltung so ist, dass durch den transparenten Bereich die Farbe von Aufbereitungsmaterial (205, 206) im Inneren (113a) des Behälters (101) sichtbar ist, wobei insbesondere der Verschluss (104) mit transparentem Material gebaut sein kann.

6. Kartusche (100) nach einem der vorherigen Ansprüche, bei der Aufbereitungsmaterial (205, 206) als ein einheitlich handhabbares und durchströmbares erstes Gebinde (201) zusammengefasst und in der Geometrie an die Innenabmessung des Behälters (101) angepasst in den Behälter (101) einbringbar oder eingebracht ist.

7. Kartusche (100) nach Anspruch 5 und 6, mit einem zweiten einheitlich handhabbaren und durchströmbaren Gebinde (202) von zweitem Aufbereitungsmaterial (206), das abhängig von seiner Verbrauchtheit einen Farbveränderung zeigt, wobei das zweite Gebinde (202) im Behälterinneren (113) im Bereich (113a) des transparenten Bereichs liegt,
wobei die beiden Gebinde (201, 202) in Wasserflussrichtung (114) hintereinander liegen können.

8. Kartusche (100) nach einem der vorherigen Ansprüche, mit einem in Flussrichtung (114) stehenden Rückschlagventil (35) am Einlassanschluss (102) oder am Auslassanschluss (103).

9. Kartusche (100) nach einem der vorherigen Ansprüche, bei der der Einlassanschluss (102) und/oder der Auslassanschluss (103) einen Stutzen vorzugsweise mit Gewinde für eine Überwurfmutter und/oder für einen Bajonettanschluss aufweist.

10. Kartusche (100) nach einem der vorherigen Ansprüche, bei der der Behälter (101) mit Kunststoffmaterial gebaut ist, wobei der Einlassanschluss (102) und/oder der Auslassanschluss (103) ein in das Kunststoffmaterial eingeschraubtes oder eingegossenes Metallteil sein kann, vorzugsweise mit oder aus Messing.

11. Kartusche (100) nach einem der vorherigen Ansprüche, bei der ein rohrförmiger Bereich (107) einen Innendurchmesser (D1, D2) von über 6 oder 8 oder 10 oder 15 cm und/oder von unter 20 oder 15 oder 12 oder 10 cm aufweist, und/oder
der Behälter eine Länge (L) von über 30 oder 40 oder 50 oder 60 cm und/oder von unter 100 oder 80 oder 60 oder 50 cm aufweist, und/oder einer oder beide Endbereiche (108, 109) flach deckelförmig oder rund kuppelförmig ausgebildet sind.

12. Wasseraufbereitungsgebinde (201, 202), mit
einem wasserdurchströmbaren, vorzugsweise geschlossenen Beutel (203, 204) oder Materialbehälter (211, 212, 216), und
im Beutel (203, 204) oder Materialbehälter (211, 212, 216) Wasseraufbereitungsmaterial (205, 206),
wobei das Gebinde (201, 202) für den Einsatz in einer Kartusche (100) nach einem der vorherigen Ansprüche ausgelegt und insbesondere dimensioniert ist.

13. Wasseraufbereitungsgebinde (201, 202) nach Anspruch 12, bei dem der Beutel ein Kunststoffmaterial ist oder aufweist, das wasserdurchlässige Öffnungen aufweist und das textilartig sein kann und/oder das verwebt und/oder versponnen sein kann oder eine perforierte Folie sein kann,
oder bei dem der Materialbehälter (211, 212, 216) aus festem Material mit Perforationen für den Wasserdurchlass gebildet ist.

14. Wasseraufbereitungsgebindesatz (208) mit
einem ersten Wasseraufbereitungsgebinde (201) nach Anspruch 13 oder 14 mit einem ersten Wasseraufbereitungsmaterial (205), das eine erste Art von Farbumschlag abhängig von seiner Verbrauchtheit zeigt, und
einem zweiten Wasseraufbereitungsgebinde (202) nach Anspruch 13 oder 14, mit einem zweiten Wasseraufbereitungsmaterial (206), das eine zweite Art von Farbumschlag abhängig von seiner Verbrauchtheit zeigt, die anders ist als die erste Art von Farbumschlag,
wobei die beiden Wasseraufbereitungsgebinde (201, 202) miteinander verbunden sein können, vorzugsweise derart, dass sie durchlaufendes Beutelmaterial aufweisen, das eine Absteppung (207) zur Schaffung der beiden Gebinde aufweist, oder dass sie einen aus mehreren Teilen (211, 212, 216) zusammengesetzten Materialbehälter aufweisen.

15. Kartusche (100) nach einem der Ansprüche 1 bis 11, mit einem oder mehreren Wasseraufbereitungsgebinden nach Anspruch 12 oder 13 oder einem Wasseraufbereitungsgebindesatz nach Anspruch 14.
